# EUROPÄISCHE PATENTSCHRIFT

(11) **EP 1 121 573 B1**
(45) Veröffentlichungstag und Bekanntmachung des Hinweises auf die Patenterteilung: **13.08.2003**
(21) Anmeldenummer: 99952619.7
(22) Anmeldetag: 20.10.1999
(51) Int. Cl.: G01G 19/04

(54) **GLEISWAAGE**
TRACK SCALES
BASCULE A WAGONS

(30) Priorität: 20.10.1998 DE 19848119
(43) Veröffentlichungstag der Anmeldung: 08.08.2001
(73) Patentinhaber: Pfister Waagen GmbH, 86165 Augsburg (DE)
(72) Erfinder: GASSMANN, Helmut, D-64342 Seeheim-Jugenheim (DE); HOSE VON WOLFFRAMSDORFF, Joachim, D-64342 Seeheim-Jugenheim (DE)
(74) Vertreter: Fiener, Josef
(86) Internationale Anmeldenummer: EP9907966
(87) Internationale Veröffentlichungsnummer: WO00023770

(56) Entgegenhaltungen:
- DE-A- 2 300 337
- DE-A- 4 444 337
- US-A- 4 170 268

## Beschreibung

Die Erfindung betrifft eine Gleiswaage mit ununterbrochen durchlaufenden Schienen, die in einer Wägestrecke auf mehreren Wägeschwellen abgestützt sind.

Derartige Gleiswaagen dienen zum Verwägen von Eisenbahnwaggons während des Überfahrens der Wägestrecke. Zur Einhaltung einer vorgegebenen Wägegenauigkeit ist es wichtig, daß die Waggons während des Überfahrens der Wägestrecke nicht in Schwingungen geraten, weil dadurch das Wägeergebnis verfälscht würde. Deshalb benötigt man ein langes, gerades Gleisstück, in dem die Wägestrecke angeordnet wird. In diesem Bereich soll das Gleisbett weitestgehend gleichmäßig elastisch sein, um keine Schwingungen anzuregen. Außerdem darf der Schienenstrang in diesem Bereich keine Stöße aufweisen. Der Einfluß von vor- und nacheilenden Rädern ist erheblich und muß vom Wägesystem prinzipiell miterfaßt werden. Veränderungen der Steifigkeit des Gleisbetts dürfen keine Vergrößerung des Eichfehlers ergeben.

Bei einer bekannten Gleiswaage der eingangs genannten Gattung (US-A-4 170 268) sind die Schwellen im Bereich der Wägestrecke als spezielle Wägeschwellen ausgebildet. Sie bestehen im wesentlichen aus Doppel-T-Trägern, die mit Dehnungsmeßstreifen beklebt sind und sich an ihren Enden an einem verhältnismäßig großen, aus Stahlbeton bestehenden Schienenfundament abstützen. Die durch die Dehnungsmeßstreifen erfaßte Biegeverformung der Doppel-T-Träger liefert ein Maß der durch die Waggonräder auf die Schienen wirkenden Gewichtskräfte.

Da der Schienenstrang ununterbrochen durchläuft, ist es notwendig, die über die Schienen in die der Wägestrecke benachbarten, nichtmessenden, normalen Schwellen übertragenen Gewichtskraftanteile zu erfassen, die einen Kraftnebenschluß für die Wägung darstellen.

In vielen Fällen werden derartige Gleiswaagen nachträglich in einen Gleisstrang eingebaut, wobei die durchlaufenden Schienen erhalten bleiben. Für den Einbau der Wägeschwellen muß das im Bereich der Wägestrecke vorhandene Gleisbett teilweise ausgeräumt und nach dem Einsetzen der Wägeschwellen wieder ergänzt werden. Dies bedingt eine Veränderung der Steifigkeit des Gleisbetts im Bereich der Wägestrecke. Die deshalb in diesem Bereich größeren Schienenverformungen sind Ursache von unerwünschten, das Meßergebnis verfälschenden Schwingungen der Waggons.

Auch wenn die Gleiswaage nicht nachträglich eingebaut wird, sondern bereits bei der Anlage des Schienenwegs ausgeführt wird, bedingt die gegenüber den normalen Schwellen wesentlich größere Bauhöhe der Meßschwellen der bekannten Gleiswaage eine veränderte Steifigkeit des Gleisbetts im Bereich der Wägestrecke.

Die unmittelbare Applikation der Dehnungsmeßstreifen an den Doppel-T-Trägern der Meßschwellen führt bei der bekannten Gleiswaage zu einer erhöhten Störanfälligkeit, weil es sehr schwierig ist, diese Dehnungsmeßstreifen in ausreichendem Maße gegen Umwelteinflüsse zu schützen. Außerdem ist der Werkstoff der Doppel-T-Träger bzw. der Schienen als Verformungskörper für einen der Wägung dienenden Sensor wenig geeignet. Die Notwendigkeit, die Applikation der Dehnungsmeßstreifen unter ungünstigen Bedingungen vor Ort vornehmen zu müssen, beeinträchtigt die erzielbare Wägegenauigkeit ebenfalls.

Die insgesamt als Wägeelemente dienenden Doppel-T-Träger der Wägeschwellen sind verhältnismäßig große Bauteile, deren Handhabung in der Fertigung Schwierigkeiten bereitet. Ihre Steifigkeit ist verhältnismäßig gering, da sie nach dem Biegebalkenprinzip beansprucht werden. Auch dies kann zu einer wesentlichen Abweichung der Steifigkeit des Gleisstrangs im Bereich der Wägestrecke gegenüber den benachbarten Bereichen führen. Eine Entkuppelung von Störgrößen, wie Biegemomenten und Querkräften ist an den Doppel-T-Trägern nicht oder nur unzureichend möglich. Die Abmessungen der Doppel-T-Träger erschweren ihre Prüfbarkeit erheblich.

Die bei der Montage der Gleiswaage vor Ort erforderlichen Arbeitsgänge, insbesondere auch die Applikation der Dehnungsmeßstreifen, führen zu einer sehr aufwendigen und längeren Montage und erfordern dadurch eine lange Sperrung des Gleisabschnitts. Ein nachträgliches Versetzen der Gleiswaage ist nur mit großem Aufwand möglich.

Aufgabe der Erfindung ist es daher, eine Gleiswaage der eingangs genannten Gattung so auszubilden, daß sie unter weitestgehender Vorfertigung ihrer Bauteile in einfacher Weise und mit geringem Aufwand in einen Gleisabschnitt eingebaut werden kann und insbesondere keine das Wägeergebnis beeinflussende Änderung der Steifigkeit im Bereich der Wägestrecke ergibt.

Diese Aufgabe wird erfindungsgemäß dadurch gelöst, daß die Wägeschwellen hinsichtlich ihrer Höhe und Breite den in der Wägestrecke ersetzten normalen Schwellen entsprechen und jeweils zwei die beiden Schienen stützende Wägezellen aufweisen und daß an den Enden der Wägestrecke angeordnete Querkraftsensoren jeweils in eine Querbohrung des Schienenstegs eingesetzte vorgefertigte Meßelemente sind.

Die Anpassung der Wägeschwellen hinsichtlich ihrer Höhe und Breite an die normalen Schwellen bewirkt, daß durch den Austausch der Schwellen keine Veränderung des gewachsenen Schotterbetts unterhalb der Schwellen und damit auch keine Veränderung der Steifigkeit des Schotterbetts unter der Wägestrecke gegenüber dem angrenzenden Schotterbett auftritt. Dies gilt insbesondere bei einem nachträglichen Einbau der Gleiswaage in einen vorhandenen Gleisabschnitt. Aber auch wenn die Gleiswaage bereits bei der Anlage des Gleisabschnitts vorgesehen wird, bedingen die gleichbleibenden äußeren Abmessungen der normalen Schwellen und der Wägeschwellen, daß der Aufbau und die Abmessungen des Gleisbetts im Bereich der Wägestrecke und in den angrenzenden Bereichen gleich sind, so daß keine Veränderung der Steifigkeit im Bereich der Wägestrecke vorliegt.

Alle für den Wägevorgang eingesetzten Meßelemente, nämlich die Wägezellen in den Wägeschwellen und die in die Querbohrungen der Schienenstege eingesetzten Querkraftsensoren, können mit den üblichen, eine hohe Meßgenaugkeit gewährleistenden Fertigungsverfahren hergestellt und vor dem Einbau geprüft werden. Unabhängig von der Beschaffenheit und Fertigungsqualität der gesamten Wägeschwellen werden für die Wägung Wägezellen verwendet, die für diesen Einsatz optimiert sind und insbesondere frei von störenden Biegemomenteneinflüssen und Querkrafteinflüssen sind.

Alle Bauteile der Gleiswaage können in einfacher Weise und ohne Beschädigung ausgebaut und an anderer Stelle wieder verwendet werden. Dadurch ist ein Versetzen der Gleiswaage mit verhältnismäßig geringem Aufwand möglich.

Gemäß einer bevorzugten Ausführungsform der Erfindung ist vorgesehen, daß jede Wägeschwelle ein Schwellengehäuse aufweist, an dessen Gehäuseboden sich die Wägezellen abstützen, die durch Öffnungen an der Schwellenoberseite ragen und die Schienen tragen. Damit ergibt sich eine weitgehend geschützte Anordnung der Wägezellen, wobei sich die äußeren Konturen und Abmessungen der Wägeschwellen weitestgehend an die der normalen Schwellen anpassen lassen.

Insbesondere ist es vorteilhaft, daß die Schwellengehäuse zumindest am Gehäuseboden und den anschließenden Gehäuseseitenwänden eine den in der Wägestrecke ersetzten normalen Schwellen entsprechende Außenkontur aufweisen.

Nachfolgend wird ein Ausführungsbeispiel der Erfindung näher erläutert, das in der Zeichnung dargestellt ist. Es zeigt:
- Fig. 1: in einem Längsschnitt einen Gleisabschnitt, in dem eine Wägestrecke ausgeführt ist; und
- Fig. 2: einen vergrößerten Schnitt längs der Linie II-II.

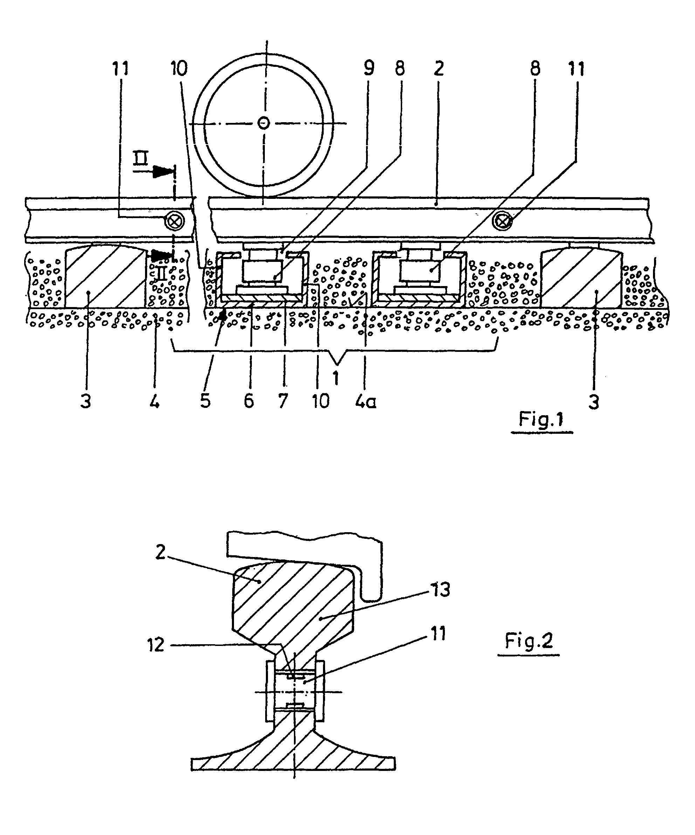

Der in Fig. 1 dargestellte Gleisabschnitt, in dem eine Wägestrecke 1 ausgebildet ist, weist ununterbrochen durchlaufende Schienen 2 auf. Während die Schienen 2 in den an die Wägestrecke 1 anschließenden Bereichen in herkömmlicher Weise auf normalen Schwellen 3 in einem Schotter-Gleisbett 4 ruhen, stützen sich die Schienen 2 in der Wägestrecke 1 auf zwei oder mehr Wägeschwellen 5 ab. Jede Wägeschwelle 5 weist ein beim dargestellten Ausführungsbeispiel aus Stahlblech bestehendes Schwellengehäuse 6 auf, an dessen Gehäuseboden 7 sich jeweils zwei Wägezellen 8 abstützen. Die Wägezellen 8 ragen durch Öffnungen 9 an der Schwellenoberseite und tragen die Schienen 2.

Die Wägezellen 8 sind so ausgelegt, daß sie auf Biegemomente und Querkräfte unempfindlich sind. Die Wägezellen 8 entsprechen in ihrem Aufbau herkömmlichen eichfähigen Wägezellen. Sie werden bei der Herstellung im Werk kalibriert.

Die Wägeschwellen 5 sind hinsichtlich ihrer Höhe und Breite den benachbarten, bzw. den in der Wägestrecke 1 ersetzten normalen Schwellen 3 angepaßt. Sie weisen zumindest am Gehäuseboden 7 und den anschließenden Gehäuseseitenwänden 10 eine Außenkontur auf, die der Außenkontur der ersetzten bzw. benachbarten normalen Schwellen 3 entspricht.

Beim nachträglichen Einbau einer Gleiswaage in einen Gleisabschnitt erfolgt keine Veränderung des gewachsenen Schotterbetts 4, auf dessen Oberkante 4a sowohl die normalen Schwellen 3 als auch die an deren Stelle eingesetzten Meßschwellen 5 ruhen. Das Schotterbett 4 behält somit seine Steifigkeit unverändert bei.

Die gleichen Außenkonturen der Schwellen 3 und der Meßschwellen 5 ermöglichen auch ein einfaches Austauschen. Die normalen Schwellen 3 werden im vorgesehenen Bereich der Wägestrecke 1 seitlich herausgezogen und durch Einschieben der Wägeschwellen 5 ersetzt, worauf die Schienen 2 mit herkömmlichem Befestigungsmaterial an den ebenfalls seitlich eingeschobenen Wägezellen 8 befestigt werden. Die seitliche Einstellung der Wägezellen 8 auf die Spurweite der Schienen 2 bzw. den Schienenabstand kann dadurch leicht erfolgen, ebenso die Einstellung der Wägezelle 8 exakt unterhalb der Schiene 2. Dies ist wichtig bei einem eventuellen Austausch einer Wägezelle 8 oder auch zur Anpassung jeweils vorgefertigter, gleich langer Schwellengehäuse 6 an unterschiedliche Spurweiten.

Zur Bestimmung des Kraftnebenschlusses bei ununterbrochen durchlaufenden Schienen 2 sind an den beiden Enden der Wägestrecke 1 jeweils Querkraftsensoren 11 eingebaut. Die ebenfalls vorgefertigten und im Werk zusammen mit den Wägezellen 8 kalibrierten Querkraftsensoren 11 werden in Querbohrungen 12 des Schienenstegs 13 der Schiene 2 kraftschlüssig eingesetzt. Für die Anbringung der Querkraftsensoren 11 ist es daher nur erforderlich, die Querbohrungen 12 an den Schienen 2 auszuführen. Die Herstellung der Querkraftsensoren 11 im Werk ermöglicht es, diese so auszuführen, daß sie alle Anforderungen an ein im Feld eingesetztes Meßelement erfüllen, wie Dichtheit, Temperaturunabhängkeit und leichte Montage.

Durch Aneinanderreihen beliebig vieler Wägeschwellen 5 lassen sich Drehgestelle und auch ganze Waggons verwiegen. Durch die hierbei erreichte größere Meßstrecke wird der Wägefehler reduziert; Fehler durch Gewichtsverlagerung von einer auf die andere Achse werden vollständig ausgeschlossen.

## Patentansprüche

1. Gleiswaage mit ununterbrochen durchlaufenden Schienen, die in einer Wägestrecke auf mehreren Wägeschwellen abgestützt sind,
**dadurch gekennzeichnet, daß**
die Wägeschwellen (5) hinsichtlich ihrer Höhe und Breite den in der Wägestrecks (1) ersetzten normalen Schwellen entsprechen und jeweils zwei die beiden Schienen (2) stützende, vorgefertigte Wägezellen (8) aufweisen und daß an den Enden der Wägestrecke (1) angeordnete Querkraftsensoren (11) jeweils in eine Querbohrung (12) des Schienenstegs (13) eingesetzte, vorgefertigte Meßelemente sind.

2. Gleiswaage nach Anspruch 1,
**dadurch gekennzeichnet, daß**
jede Wägeschwelle (5) ein Schwellengehäuse (6) aufweist, an dessen Gehäuseboden (7) sich die Wägezellen (8) abstützen, die durch Öffnungen (9) an der Schwellenoberseite ragen und die Schienen (2) tragen, sowie seitlich entlang dem Gehäuseboden (7) einstell- und justierbar sind.

3. Gleiswaage nach Anspruch 2,
**dadurch gekennzeichnet, daß**
die Schwellengehäuse (6) zumindest am Gehäuseboden (7) und den anschließenden Gehäuseseitenwänden (10) eine den in der Wägestrecke (1) ersetzten normalen Schwellen (3) entsprechende Außenkontur aufweisen, wobei das Schwellengehäuse (6) durchgehend mit einem U-förmigen Hohlquerschnitt ausgebildet ist.

## Claims

1. Track scales with uninterrupted continuous rails which are supported in a weighing section of line on several weighing sleepers,
**characterised in that**
in terms of their height and width the weighing sleepers (5) correspond to the normal sleepers that are replaced in the weighing section of line (1) and each have two prefabricated weighing cells (8) which support the two rails (2), and **in that** transverse force sensors (11) arranged at the ends of the weighing section of line (1) are each prefabricated measuring elements which have been introduced into a transverse borehole (12) of the rail stem (13).

2. Track scales as claimed in Claim 1, **characterised in that** each weighing sleeper (5) exhibits a sleeper housing (6), on the housing floor (7) of which the weighing cells (8) are supported, which project through openings (9) in the upper side of the sleepers and bear the rails (2) and may be adjusted and set laterally along the housing floor (7).

3. Track scales as claimed in Claim 2, **characterised in that** the sleeper housings (6) at least display an external contour corresponding to the normal sleepers (3) which are replaced in the weighing section of line (1) on the housing floor (7) and the connecting side walls (10) of the housing, wherein the sleeper housing (6) is continuously formed with a U-shaped hollow section.

## Revendications

1. Bascule à wagons avec des rails continus ininterrompus qui sont appuyés sur plusieurs traverses de pesée dans une course de pesée, **caractérisée en ce que** les traverses de pesée (5) correspondent, quant à leur hauteur et à leur largeur, aux traverses normales remplacées dans la course de pesée (1), et présentent chacun deux cellules de pesée (8) préfabriquées, soutenant les deux rails (2), et **en ce que** des capteurs de force transversale (11) disposés aux extrémités de la course de pesée (1) sont des éléments de mesure préfabriqués, logés chacun dans un alésage transversal (12) de l'âme du rail (13).

2. Bascule à wagons selon la revendication 1, **caractérisée en ce que** chaque traverse de pesée (5) présente un boîtier de traverse (6), sur le fond du boîtier (7) duquel s'appuient les cellules de pesée (8) qui dépassent des orifices (9) sur le côté supérieur de la traverse et portent les rails (2), et qui sont réglables et ajustables latéralement le long du fond du boîtier (7).

3. Bascule à wagons selon la revendication 2, **caractérisée en ce que** les boîtiers de traverse (6) présentent, au moins sur le fond du boîtier (7) et sur les parois latérales du boîtier adjacentes (10), un contour extérieur correspondant aux traverses (3) normales remplacées dans la course de pesée (1), le boîtier de traverse (6) étant formé en continu avec une section creuse en forme de U.
